# EUROPEAN PATENT APPLICATION

(11) **EP 3 489 034 A1**
(43) Date of publication of application: **29.05.2019**
(21) Application number: 18207634.9
(22) Date of filing: 21.11.2018
(51) Int. Cl.: B60C 7/10, B60C 3/02

(54) **TUBULAR CASING FOR BICYCLE WHEEL, AND BICYCLE WHEEL**

(30) Priority: 22.11.2017 IT 201700133758
(71) Applicant: Rubin, Alessandro, 35121 Padova (IT)
(72) Inventor: Rubin, Alessandro, 35121 Padova (IT)
(74) Representative: Mitola, Marco

(57) **Abstract**

**A casing** (8) for a bicycle wheel (4) in which the casing (8) presents a toroidal geometry with respect to an axis of symmetry and rolling (X-X) of the wheel (4), defining an inner chamber (12), wherein said inner cavity (12) is filled integrally with a filler material (16) such as a mousse so as to have no gaps inside said inner chamber (12), wherein the casing (8), on an inner side (20), facing the axis of symmetry and rolling (X-X) comprises attachment means (24) to an associable rim (28), in which on the casing (8), from an outer side (40), facing the side opposite to the inner side (20), a tread (44) is associated. Advantageously, between the tread (44) and the filler material (16) damping means (48) are inserted.

## Description

### FIELD OF APPLICATION

The present invention relates to a tubular casing for bicycle wheel and a bicycle wheel comprising said casing.

### PRIOR ART

As is known, in the field of cyclists the problem of punctures is very much felt, quite frequent since the tyres are rather thin and also the common roads, and even more dirt roads are sprinkled with sharp bodies and debris that can cause easy puncture of the tyre.

A puncture is a rather problematic event for a cyclist, since it makes the vehicle unusable and forces the user to make makeshift repairs. Otherwise there would be much more extensive damage that could easily compromise the wheel's integrity.

For these reasons it is known in the cyclists sector to use puncture prevention or repair kits.

These kits, as mentioned, are however rather inconvenient to use and, above all, do not prevent the phenomenon itself of the puncture that can also entail serious risks for the user: think for example when a sudden puncture occurs in speed, cornering, in descent, or on slippery or wet ground.

For these reasons, both solid rubber solutions and tyres have been placed on the market for cycles in which the volume of air enclosed by the tyre casing is completely or partially filled with a foamy or polymeric material mousse.

Solutions involving solid rubber involve problems as the installation on the rim is complicated and laborious; in addition, the rolling resistance is high due to the single-component construction.

Moreover, the solutions with hybrid mousses, in which the mousse does not completely fill the inner tube, do not prevent the puncture due to spikes, sharp bodies and the like.

The total filling mousse or solid rubber constitute a real filler for the volume enclosed by the casing which prevents the occurrence of a collapse thereof. In this way, the user is in any case able to prolong his journey without having to necessarily stop.

In other words, it is impossible for punctures to occur.

Furthermore, the hybrid solution with the mousse does not in fact prevent a partial collapse of the tyre in the event of a puncture, since between the mousse filling layer and the casing an air gap is provided which, in case of puncture, is immediately compressed determining the partial sagging of the tyre and therefore the total loss of performance.

### DISCLOSURE OF THE INVENTION

The need of solving the drawbacks and limitations mentioned with reference to the prior art is therefore felt.

Therefore, the need is felt to provide a casing for a bicycle wheel and a bicycle wheel which on the one hand ensures good performance (i.e. low rolling resistance and low weight) in all conditions of use and on the other that prevents the sagging thereof in case of puncture of the tread, as well as ensuring greater ease and convenience of assembly.

Such a need is met by a tubular casing for bicycle wheel according to claim 1.

### DESCRIPTION OF THE DRAWINGS

Further features and advantages of the present invention will appear more clearly from the following description of preferred non-limiting embodiments thereof, in which:
- figures 1-3 show cross-sectional views of a casing for a bicycle wheel mounted on a respective rim, according to three possible embodiments of the present invention, in which the sectional plane passes through the axis of rotation of the same wheel;
- figure 4 is a perspective partially sectional view of a portion of a bicycle wheel according to a further embodiment of the present invention;
- figure 5 shows a sectional view of the bicycle wheel in figure 4, along a section plane passing through the axis of rotation of the wheel itself ;
- figures 6-7 show further sectional views of a bicycle wheel, along a section plane passing through the axis of rotation of the same wheel, according to further embodiments of the present invention .

Elements or parts of elements in common to the embodiments described below are referred to with the same reference numerals.

### DETAILED DESCRIPTION

With reference to the above figures, reference numeral 4 globally indicates an overall schematic view of a bicycle wheel according to the present invention.

The bicycle wheel 4 comprises a casing 8 having a toroidal geometry with respect to an axis of symmetry and rolling X-X of the wheel 4.

The concept of casing in the present invention should be understood in a broad and non-limiting meaning, since the casing 8 may be of various types.

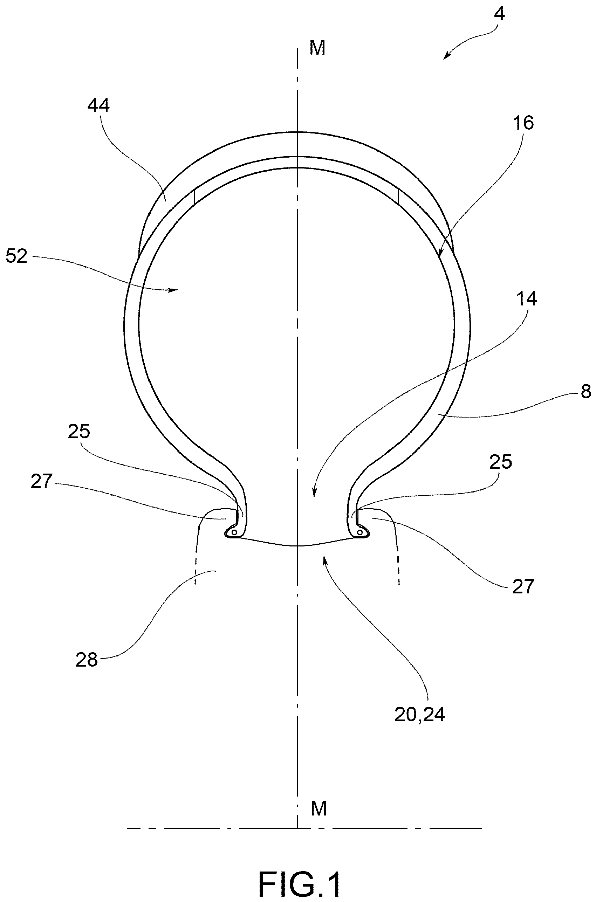

According to a possible embodiment, the casing 8 is an open-geometry casing (figure 1-3). This open geometry provides a substantially 'U' or 'C' shape in which an open side 14 of the 'U' or 'C' is directly facing the rim of the wheel, as better described below.

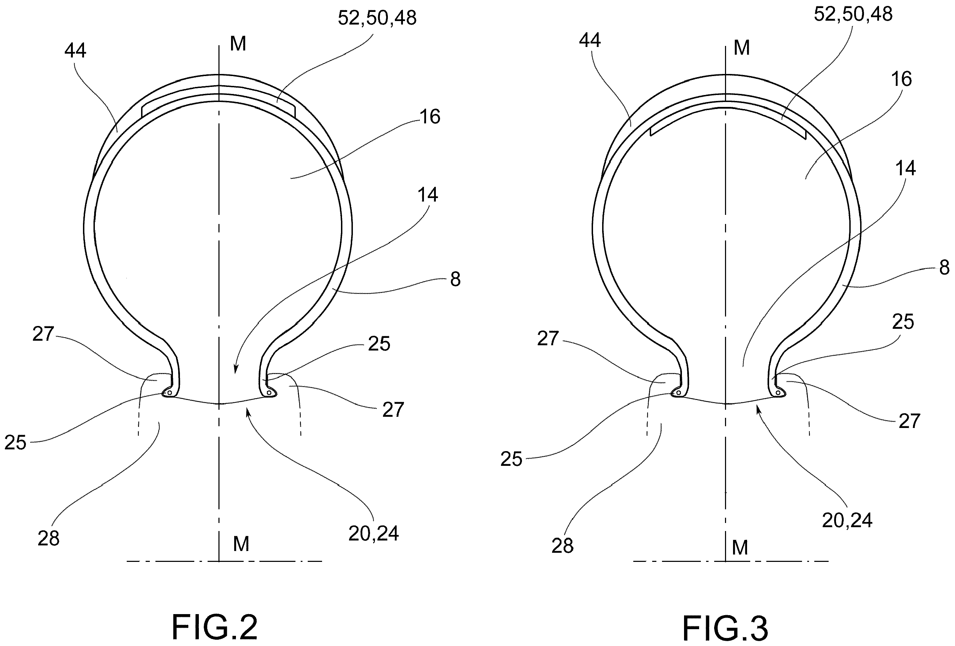

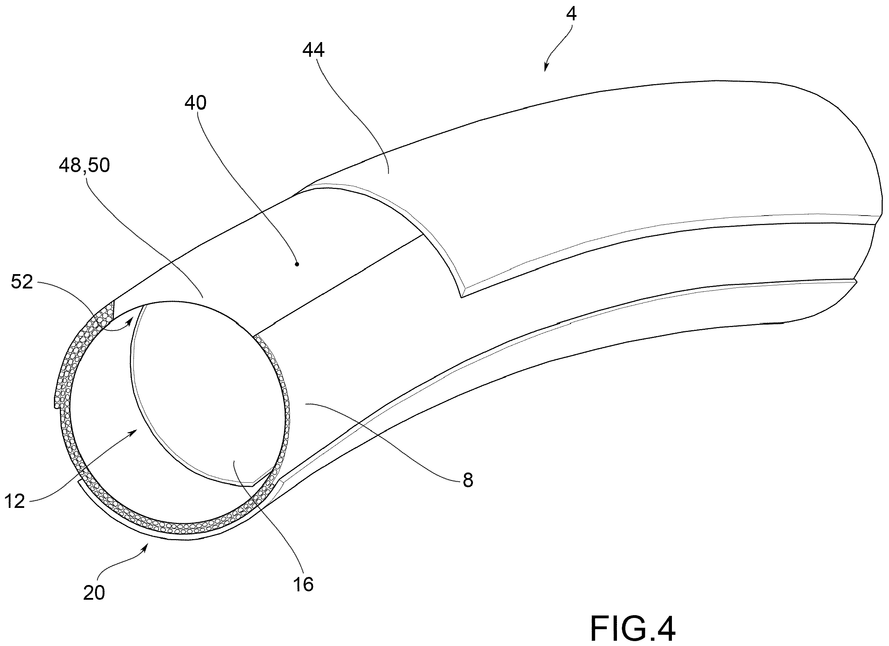

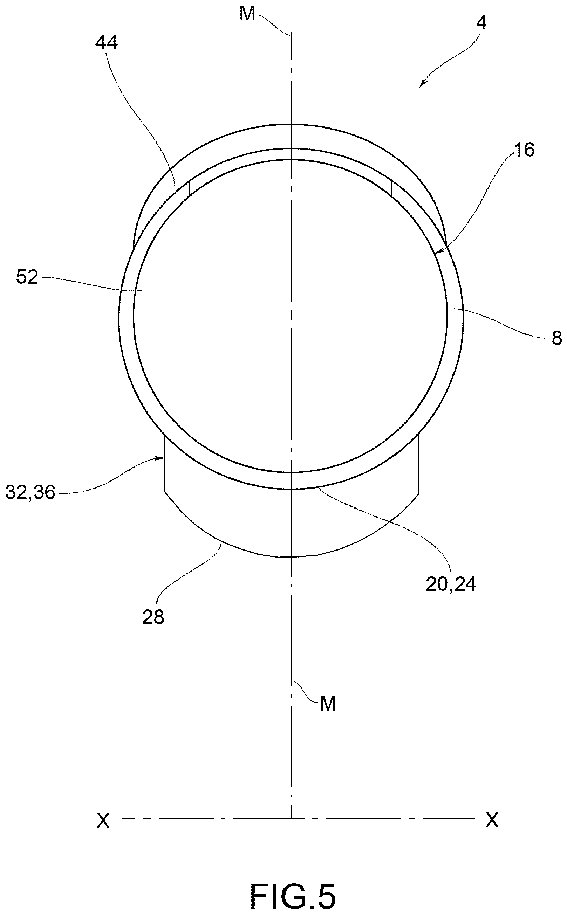

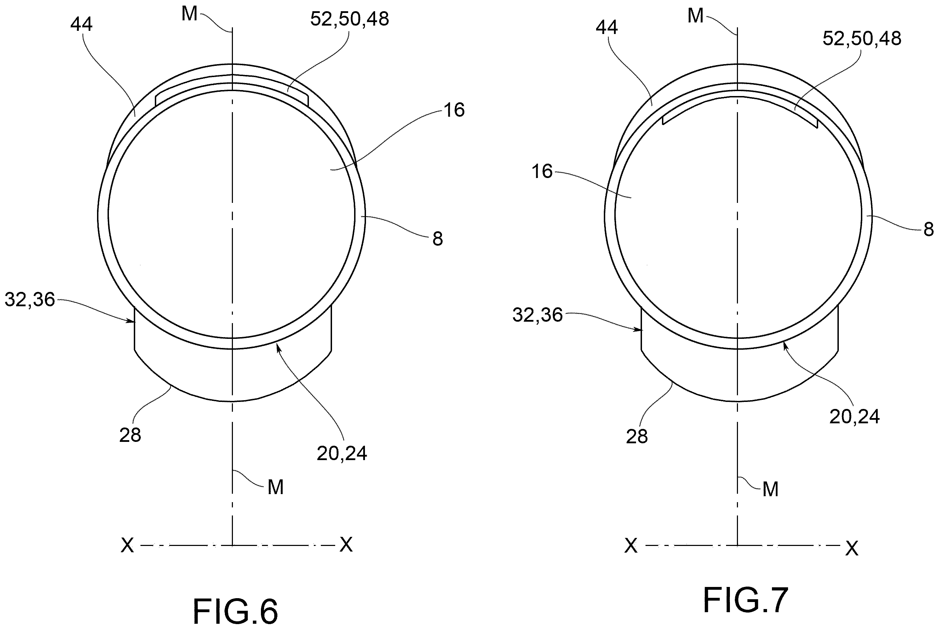

According to a further possible embodiment, the casing 8 is a tubular casing with a closed tubular geometry (figures 3-7).

Preferably, the toroidal geometry is of circular type: in other words, with respect to a section plane passing through the axis of symmetry and rolling X-X, the casing 8 has a substantially circular cross-section. Obviously the present invention is not limited to a specific casing 8 geometry.

The casing 8, whether open or tubular, defines or delimits an inner chamber or cavity 12 completely filled with a filler material 16 such as a mousse so as not to have voids inside said inner chamber 12.

Advantageously, the filler material 16 completely fills the inner cavity 12: in other words, there are no chambers, holes or voids inside the inner chamber 12 which is completely filled by the filler material 16. For this reason, it is not possible to speak of a tyre, since the wheel according to the present invention does not have cavities filled totally or even partially with air or other gases.

Said filler material may comprise polyethylene and/or polyurethane and/or an expanded technopolymer.

The filler material 16 of the casing 8, whether open or tubular in shape, has a variable compressive strength based on the use of the rubber, i.e. it can be varied according to the total weight given by the cyclist weight and the weight of the bicycle.

The tubular casing 8 on the inside 20 facing the axis of rolling and symmetry X-X comprises attachment means 24 to an associable wheel rim 28.

In the case of casing 8 with open geometry, the inner side 20 is also the "open" side, that is the one which exhibits the interruption of continuity of the 'C' or 'U' geometry. In the case of a closed-geometry casing 8, the inner side 20 is closed and contiguous with the rest of the perimeter of the tubular casing.

For the purposes of the present invention, the dimensions and the materials of the rim 28 which can be of the light alloy or carbon fibre type, of the spoked or lenticular type, are unimportant.

Typically, the rim has an interface wall 32 having a concavity 36 suitable for abutting said inner side 20 of the casing 8.

Typically, the interface wall 32 is counter-shaped with respect to the inner side 20 from the casing 8: typically said interface wall 32 has a cylindrical geometry having the same radius of curvature with respect to the casing 8.

In the case of a closed or tubular geometry casing, the attachment means 24 typically comprise gluing means so as to definitively fix the casing 8 and therefore the whole wheel 4 to the relative rim 28.

In the case of an open geometry casing, the attachment means 24 comprise a pair of perimetral flaps or beads 25 suitable for realizing a shape coupling with corresponding edges or shoulders 27 of the associable rim 28, in a known manner.

Preferably, the interface wall 32, with respect to a section plane passing through the rolling axis X-X, has an angular width covering a circular sector of the casing 8 between 60° and 80°.

Obviously, the interface wall 32 is arranged symmetrically with respect to a centreline plane M-M of the wheel 4, said centreline plane M-M being perpendicular to the axis of rolling and symmetry X-X.

On the tubular casing 8, on the outside 40, facing opposite the inner side 20, a tread 44 is associated. Typically, the tread 44 is made of polymeric material and is shaped so as to ensure adequate adherence with the ground.

The tread 44 extends angularly for a circular sector greater than that of the interface wall 32 of the rim 28. For example, the tread 44 extends angularly for a circular sector between 110° and 180°.

The tread 44 is arranged symmetrically with respect to the centreline plane M-M of the wheel 4.

Advantageously, between the tread 44 and the filler material 16 damping means 48 are inserted.

According to an embodiment of the present invention, said damping means 48 comprise an elastomer layer 50.

Preferably, said elastomer layer 50 has a hardness of between 50 and 70 Shore A.

Even more preferably, said elastomer layer 50 has a hardness equal to 60 Shore A.

Preferably, said elastomer layer 50 has a rebound elasticity measured at 20° C, <5%.

According to a possible embodiment, the elastomer layer 50 has a thickness of between 50% and 100% of the thickness of the casing 8), said thicknesses being measured with respect to a cross-section plane passing through the axis of rolling and symmetry X-X

Preferably, the elastomer layer 50 has a thickness of 1 mm.

According to a preferred embodiment, the casing 8, on the side of the tread 44, comprises a seat or recess 52 which internally houses the damping means 48.

Preferably, said seat or recess 52 is counter-shaped with respect to the damping means 48.

The seat 52 can be formed inside the tread 44. For example, it is possible to integrally incorporate/embed the seat 52 and therefore the damping means 48 inside the tread 44.

It is also possible to obtain the seat 52 at an interface between the tread 44 and the casing 8.

According to a further embodiment, the seat 52 is made at an interface between the casing 8 and the filler material 16.

According to a further embodiment, the seat 52 is obtained, that is to say embedded, inside the filler material 16.

According to an embodiment, in relation to a cross-section plane passing through the axis of rolling and symmetry X-X, the damping means 48 extend at an angle for an arc of a circle between 40° and 80°.

Preferably, the damping means 48 are arranged symmetrically with respect to a centreline plane M-M of the wheel 4 perpendicular to the axis of rotation X-X.

Preferably, the damping means 48 are arranged flush with respect to the casing 8: in other words, the outer side wall of the casing, which interfaces with the tread 44, is filled seamlessly by the damping means 48, at the profile of the seat 52.

As can be understood from the description, the bicycle wheel according to the invention allows overcoming the drawbacks of the prior art.

In fact, the bicycle wheel of the present invention due to the integral filler of the casing by means of the mousse core does not sag in the event of a puncture. In other words, the presence of any type and size of inner tube is completely eliminated.

Therefore the bicycle wheel is not a tyre, since it does not contain air or in any case gas under pressure therein.

The wheel is therefore always validly supported by its inner core, to the advantage of the ability to bear the weight of the bicycle and its driver. Therefore, even if the tyre is punctured by a blunt body (even if the dimensions are not negligible), the wheel does not deform and the driver does not lose control of the vehicle. Therefore, the driver is not forced to stop to make wheel repairs, as is the case with known tyre solutions.

At the same time, the wheel of the present invention, although supported by the presence of the integral inner core, is not uncomfortable or little comfortable or with high rolling resistance for the user, due to the fact that it provides at least one inner damping layer, interposed between the tread and wheel casing or preferably, integrated and housed in a suitable seat formed inside said casing.

In this way on the one hand the safety and efficiency of the wheel is improved, and on the other, compromising and affecting its comfort is prevented.

Advantageously, the embodiment with tubular and integral casing is able to ensure an even higher resistance to bending and torsion of the wheel.

The casing according to the present invention, whether it is open or closed tubular geometry, ensures better performance than the classic inner tube solutions in terms of rolling resistance, comfort, grip, as well as allowing the use of lighter rims and ensure a more practical and quick assembly.

The attachment of the casing to the rim of the wheel may take place in a known manner by attachment means such as for example adhesives, such as putty or double-sided adhesive, in the case of tubular casing, and with the usual shape couplings with the rims or shoulders of the wheel rim, in the case of casing with open geometry.

A man skilled in the art may make several changes and adjustments to the casings and to the wheels described above in order to meet specific and incidental needs, all falling within the scope of protection defined in the following claims.

## Claims

1. Tubular casing (8) for a wheel (4) of bicycles wherein
- the tubular casing (8) presents a closed toroidal tubular geometry with respect to an axis of symmetry and rolling (X-X) of the wheel (4), defining an inner chamber (12),
- wherein said inner chamber (12) is completely filled with a filler material (16) such as a mousse so as not to have voids inside said inner chamber (12),
- wherein the tubular casing (8), on the inside (20), facing the axis of symmetry and rolling (X-X) comprises attachment means (24) to an associable wheel rim (28),
- wherein on the tubular casing (8), on the outside (40), facing opposite the inner side (20), a tread (44) is associated,
- wherein between the tread (44) and the filler material (16) damping means (48) are inserted.

2. Tubular casing (8) for a wheel (4) of bicycles according to claim 1, wherein said damping means (48) comprise a layer (50) of elastomer.

3. Tubular casing (8) for a wheel (4) of bicycles according to claim 2, wherein said elastomer layer (50) has a hardness of between 50 and 70 Shore A.

4. Tubular casing (8) for a wheel (4) of bicycles according to any of the claims from 2 to 3, wherein said elastomer layer (50) has a thickness of between 50% and 100% of the thickness of the casing (8), said thicknesses being measured with respect to a cross-section plane passing through the axis of rolling and symmetry (X-X).

5. Tubular casing (8) for a wheel (4) of bicycles according to any of the claims from 2 a 6, wherein said elastomer layer (50) has a rebound elasticity, measured at 20°C,<5%.

6. Tubular casing (8) for a wheel (4) of bicycles according to any of the preceding claims, wherein the damping means are housed inside a seat or recess (52).

7. Tubular casing (8) for a wheel (4) of bicycles according to claim 6, wherein said seat or recess (52) is counter-shaped to the damping means (48).

8. Tubular casing (8) for a wheel (4) of bicycles according to claim 6 or 7, wherein said seat (52) is made inside the tread (44).

9. Tubular casing (8) for a wheel (4) of bicycles according to claim 6 or 7, wherein said seat (52) is made at an interface between the tread (44) and the casing (8).

10. Tubular casing (8) for a wheel (4) of bicycles according to claim 6 or 7, wherein said seat (52) is made at an interface between the casing (8) and the filler material (16).

11. Tubular casing (8) for a wheel (4) of bicycles according to claim 6 or 7, wherein said seat (52) is made inside the filler material (16).

12. Tubular casing (8) for a wheel (4) of bicycles according to any of the preceding claims where, in relation to a cross-section plane passing through the axis of rolling and symmetry (X-X), the damping means (48) extend at an angle for an arc of a circle between 40° and 80°.

13. Tubular casing (8) for a wheel (4) of bicycles according to any of the preceding claims, wherein the damping means (48) are arranged symmetrically with respect to a centreline plane (M-M) of the wheel (4) perpendicular to the axis of rolling and symmetry (X-X).

14. Tubular casing (8) for a wheel (4) of bicycles according to any of the preceding claims, wherein the damping means (48) are arranged flush with the casing (8).

15. Tubular casing (8) for a wheel (4) of bicycles according to any of the preceding claims, wherein said casing is open or tubular type.

16. Wheel (4) for bicycles, comprising a wheel rim (28) onto which a tubular casing (8) for a wheel (4) of bicycles according to any of the previous claims is fitted integrally and coaxially.
